**Europäisches Patentamt**

**European Patent Office**

**Office européen des brevets**

(19)

(11) Veröffentlichungsnummer: **0 285 162 B1**

(12) **EUROPÄISCHE PATENTSCHRIFT**

(45) Veröffentlichungstag der Patentschrift: **04.09.91**

(51) Int. Cl.⁵: **B61D 17/22**

(21) Anmeldenummer: **88105280.7**

(22) Anmeldetag: **30.03.88**

(54) **Faltenbalg.**

(30) Priorität: **02.04.87 DE 3711032**

(43) Veröffentlichungstag der Anmeldung:
**05.10.88 Patentblatt 88/40**

(45) Bekanntmachung des Hinweises auf die
Patenterteilung:
**04.09.91 Patentblatt 91/36**

(84) Benannte Vertragsstaaten:
**AT BE CH DE FR GB IT LI NL SE**

(56) Entgegenhaltungen:
**DE-C- 2 934 486**

(73) Patentinhaber: **HÜBNER Gummi- und Kunststoff GmbH
Agathofstrasse 15
W-3500 Kassel-Bettenhausen 1(DE)**

(72) Erfinder: **Schmidt, Helmbrecht Dipl.-Ing.
Eichwaldstrasse 8a
W-3501 Niestetal-Sandershausen(DE)**

(74) Vertreter: **Walter, Helmut, Dipl.-Ing.
Aubinger Strasse 81
W-8000 München 60(DE)**

## Beschreibung

Faltenbälge, die Übergangseinrichtungen zwischen gelenkig miteinander gekuppelten Fahrzeugen (Schienen- und Straßenfahrzeuge) umgeben, bestehen im allgemeinen aus einem Polymer, der durch eine eingelegte Gewebebahn verstärkt ist. Dieses Material könnte auch dahingehend definiert werden, daß eine Gewebebahn beiderseits mit einem natürlichen, vor allem aber künstlichen Gummi (Polymer) beschichtet ist. Die derart zu einem Faltenbalg geformte Materialbahn ist in sich nachgiebig bzw. verformbar, nicht aber eleastisch verformbar; die wegen der Bewegungen der Fahrzeuge relativ zueinander erforderliche Verformbarkeit des Balges ergibt sich allein aus der Verformung der Materialbahn zu dem Faltenbalg. Im allgemeinen wird dabei nicht eine einzige Materialbahn zu einem Faltenbalg geformt. Es ist dabei vielmehr üblich, eine Mehrzahl von streifenförmigen Materialbahnen an ihren Längsrändern miteinander zu verbinden, um auf diese Weise den ziehharmonikartigen Faltenbalg zu bilden. Die Verbindung erfolgt durch z.B. Nähen oder Kleben und/oder umlaufende Klemmprofile.

Im allgemeinen haben die Faltenbälge in Umfangsrichtung ringsumlaufend gleiche Außenkontur und außer in den Ecken weitgehend gleiche Faltentiefe, obwohl die Anforderungen an die Nachgiebigkeit in den verschiedenen Bereichen des Faltenbalges durchaus unterschiedlich sind. So sollten die Balgseitenwände in vertikaler Richtung so steif sein, daß die Balghöhe gewährleistet ist, während das Balgdach und der gegebenenfalls vorhandene Balgboden in den horizontalen Ebenen relativ weich sein sollen, um den notwendigen seitlichen Versatz der Fahrzeuge gegeneinander nicht zu sehr zu behindern.

Um diesem Umstand wenigstens teilweise Rechnung zu tragen, ist es bereits bekannt, den Balg in den Übergangsbereichen zwischen Balgseitenwänden und Balgdach doppelt oder mehrfach zu falten, d.h. jede Falte nochmals in sich zu falten, weil ohne diese Maßnahme die Übergangsbögen den Balg in Querrichtung in besonderem Maße versteifen. Diese Maßnahme ist jedoch relativ aufwendig, sie wird deshalb nicht regelmäßig angewendet, und weitere Maßnahmen, um den unterschiedlichen Gegebenheiten in den verschiedenen Balgbereichen Rechnung zu tragen, sind wegen des damit verbundenen Aufwandes bisher nicht bekannt bzw. angewendet worden.

Andererseits ist es neuerdings möglich, daß man die Nachgiebigkeit einer Materialbahn aus Polymerverbindungen dadurch beeinflussen kann, daß man der Materialbahn Energie zuführt, sie insbesondere bestrahlt, z.B. mit Elektronen-oder Röntgenstrahlen (DE-A-36 29 701). Durch entsprechende Dosierung der Strahlung kann beispielsweise ein relativ harter Polymer erweicht, durch andere Dosierung ein relativ weicher Polymer härter gemacht werden, indem die Zahl der Molekülbindungen vergrößert oder verkleinert wird.

Die Erfindung zieht nun aus den beiden Techniken, d.h. der bisherigen Herstellung von Faltenbälgen, sowie der Behandlung von Polymeren mit Energiezufuhr zur Veränderung der Zahl der Molekülbindungen (und der Möglichkeit der Benutzung von dehnbaren Geweben) die Schlußfolgerung, daß es durch zweckentsprechende Anwendung der Energiezufuhr, also insbesondere der Dosierung der Strahlung möglich sein muß mit relativ geringem Aufwand einen Faltenbalg aus einem mit einem Polymer beschichteten Gewebe so zu behandeln, daß in den einzelnen Bereichen des Balges dieser genau die Materialsteifigkeit bzw. Materialweichheit hat, die für diesen Balgbereich mit Rücksicht auf eine gewollte Verformbarkeit zweckmäßig ist.

So ist es möglich, die Seitenwände so zu bestrahlen, daß die das Gewebe umhüllende Polymerschicht versteift wird, indem die Zahl der Molekülbindungen erhöht wird. Dadurch können die Balgseitenwände besser als ohne Bestrahlung dem Balg die Steifigkeit in vertikaler Richtung geben, die notwendig ist, um den Balg aufrecht zu halten. Diese Eigenschaft kann mit versteiften Materialstreifen in den Seitenwandbereichen beispielsweise so weit getrieben werden, daß der Balg auch ohne Rahmen nicht in sich zusammenfällt. Andererseits kann die Beschichtung im Dach- und gegebenenfalls Bodenbereich des Balges durch Verringerung der Molekülbindungen so weich gemacht werden, daß die Verformbarkeit des Gewebes durch die Beschichtung nicht behindert werden muß.

Andererseits kann die Nachgiebigkeit auch innerhalb einer Balgwand durch Strahleneinwirkung differenziert werden.

Wenn bei üblichen Faltenbälgen die Verformbarkeit einer Balgwand dadurch gegeben ist, daß die Dehnung zwischen den steifen Klemmprofilen aus der konstruktiven Verformung, also dem Öffnen der Falte genommen wird, so kann bei einem erfindungsgemäßen Balg das Klemmprofil wegfallen, wegen der Versteifung des in der äußeren Randzone befindlichen Materials durch Strahleneinwirkung, welche das Polymer-Material partiell im Klemmprofil-Bereich verhärtet.

Andererseits sind Faltenbälge bekannt, bei denen die Materialbahnen in sich relativ steif sind, gegebenenfalls sogar Metallstreifen sind, und an ihren Längsrändern durch Scharniere miteinander verbunden sind. Die Eigenschaften der Metallstreifen und der Scharniere können bei einem erfindungsgemäßen Balg durch unterschiedliche Bestrahlung der mit einem Polymermaterial beschichteten Gewebebahn in den Scharnierbereichen und den Materialbahnbereichen erzielt werden oder durch entsprechende Bestrahlung nur des einen Bereiches, so daß die beschichtete Gewebebahn im Scharnierbereich erweicht oder im Bahnenbereich versteift wird.

Wenn bisher angenommen wurde, daß im gesamten Faltenbalg eine Gewebeeinlage gleicher Eigenschaft verwendet wird, so kann der angestrebte Effekt in weiterer Ausgestaltung der Erfindung noch durch Verwendung verschiedener Gewebeeinlagen verstärkt werden. Im Bereich relativ weicher Polymere kann eine in sich elastisch verformbare Gewebeeinlage verwendet werden, um die relativ große Nachgiebigkeit des Polymeres in diesem Bereich voll nutzen zu können, während in den Bereichen relativ steifen Polymeres eine unelastische Gewebeeinlage Verwendung findet, um entsprechend die relativ geringe Nachgiebigkeit der Polymerbeschichtung in der Gewebeeinlage ihre Entsprechung finden zu lassen. Diese Lösung bietet sich insbesondere für die Bereiche der Übergangsbögen an, indem dort die Beschichtung so bestrahlt wird, daß sie relativ sehr nachgiebig ist und diese Nachgiebigkeit der Beschichtung in einem entsprechend elastisch nachgiebigen Gewebe ihre Entsprechung findet.

Dies kann zu einem Balg führen, der in jedem Bereich die für eine optimale Auslegung erforderliche Materialverformbarkeit hat und bei dem dies mit dem einfachen Mittel unterschiedlicher Bestrahlung allenfalls in Verbindung mit unterschiedlich elastisch verformbarer Gewebeeinlage erzielt wird. Die Seitenwände sind in vertikaler Richtung relativ steif. Dach und gegebenenfalls Boden sind so behandelt, daß der seitliche Fahrzeugversatz im wesentlichen unbehindert möglich ist. Die Übergangsbögen sind so nachgiebig gemacht - durch Bestrahlung und gegebenenfalls elastisch nachgiebiger Gewebeeinlage -, daß von ihnen eine versteifende Wirkung nicht ausgeht. Dach und Boden sollen selbstverständlich nicht durchhängen.

Die Energiezufuhr zum Balg kann unter Verwendung einer Maskentechnik bewirkt werden, indem die Maske die Balgbereiche gegen Energiezufuhr abdeckt, die unbeeinflußt bleiben sollen und die Durchlässe in den Bereichen aufweist, in denen dem Balg Energie zugeführt werden soll.

Mit dieser Technik kann auch ein einziger Stoff Verwendung finden, der in sich dehnbar ist, wo aber die Stellen, die zusätzlich durch Strahlen (oder chemische Verfahren u.a.m.) versteift worden sind die Dehnung des beschichteten dehnbaren Gewebes durch die Härte der Beschichtung teilweise oder völlig einschränken bzw. unmöglich machen.

**Patentansprüche**

1. Faltenbalg zum Einbau zwischen zwei Schienen- oder Straßenfahrzeugen, die gelenkig miteinander verbunden sind, wobei der Faltenbalg einen im wesentlichen rechteckigen Querschnitt mit einem horizontalen Dach, zwei vertikalen Seitenwänden und gegebenenfalls einem horizontalen Boden aufweist, zwischen den Seitenwänden und dem Dach sowie gegebenenfalls dem Boden bogenförmige Übergangsbereiche aufweist und aus einem Gewebe besteht, das beiderseitig mit einem Polymer beschichtet ist, **dadurch gekennzeichnet,** daß unter Verwendung der an sich bekannten Strahlenvernetzung in Maskentechnik in den Seitenwänden zu beiden Seiten der Faltenspitzen die Beschichtung des Gewebes gehärtet ist, in den Übergangsbogen die Beschichtung des Gewebes weicher gemacht ist.

2. Faltenbalg nach Anspruch 1, **dadurch gekennzeichnet,** daß das Gewebe im Bereich der Übergangsbogen elastisch, im Bereich der Seitenwände zu beiden Seiten der Spitzen unelastisch verformbar ist.

**Claims**

1. Corrugated bellows interposable between two rail or road vehicles articulated to one another, the bellows having a substantially rectangular cross-section comprising a horizontal roof, two vertical side walls and possibly a horizontal floor, arcuate transition zones being present between the side walls and the roof and possibly between the side walls and the floor, the bellows being made of a woven fabric polymer-coated on both sides, characterised in that by means of known radiation cross-linking in association with masking, the coating of the woven fabric is hardened in the side walls on both sides of the corrugation apexes and the coating of the fabric is softened in the transition curves.

2. Bellows according to claim 1, characterised in that the woven fabric is resilient in the transition curve zones and is deformable non-resiliently in the side wall zones on both sides of the apexes.

**Revendications**

1. Soufflet d'intercommunication destiné à être monté entre deux véhicules sur rails ou véhicules routiers qui sont reliés entre-eux de manière articulée, le soufflet présentant une section transversale sensiblement rectangulaire, avec un toit horizontal, deux parois latérales verticales et, le cas échéant, un plancher horizontal, présentant également des zones de transition cintrées entre les parois latérales et le toit et, le cas échéant, le plancher, le soufflet étant constitué par un tissu revêtu sur ses deux faces par un polymère, caractérisé en ce que par l'utilisation de la réticulation par irradiation connue en soi, en association avec la technique des masques, le revêtement du tissu est rendu plus dur dans les parois latérales, des deux côtés des arêtes de plis, et le revêtement du tissu est rendu plus mou dans les parties cintrées de transition.

2. Soufflet d'intercommunication selon la revendication 1, caractérisé en ce que le tissu peut se déformer de manière élastique dans la zone des parties cintrées de transition, et de manière non élastique dans la zone des parois latérales des deux côtés des arêtes.